# EUROPÄISCHE PATENTANMELDUNG

(11) **EP 1 790 871 A2**
(43) Veröffentlichungstag der Anmeldung: **30.05.2007**
(21) Anmeldenummer: 06122897.9
(22) Anmeldetag: 25.10.2006
(51) Int. Cl.: F16D 41/06

(54) **Freilaufkupplung**

(30) Priorität: 25.11.2005 DE 102005056220
(71) Anmelder: Schaeffler KG, 91074 Herzogenaurach (DE)
(72) Erfinder: Altmann, Frieder, 96178 Pommersfelden (DE)

(57) **Zusammenfassung**

In einer Freilaufkupplung (1) ist zwischen einem inneren Laufring (3) und einem äußeren Laufring ein Ringraum gebildet, in welchem ein Käfig (5) angeordnet ist, der Aussparungen (4) zur Aufnahme von Klemmkörpern (2) aufweist, wobei jede Aussparung (4) durch in axiale Richtung verlaufende Querstege (10) begrenzt ist und sich an die Querstege (10) jeweils in eine Aussparung (4) ragende, die Klemmkörper (2) mit einer Kraft beaufschlagende Federelemente (6) anschließen. Auf der dem Federelement (6) abgewandten Seite des Querstegs (10) erstreckt sich mindestens eine der Halterung des Klemmkörpers (2) dienende Haltenase (14) in eine Aussparung (4).

## Beschreibung

### Gebiet der Erfindung

Die vorliegende Erfindung betrifft eine reibschlüssige Freilaufkupplung mit einem zwischen einem inneren Laufring und einem äußeren Laufring gebildeten Ringraum, in welchem in einem Käfig gehaltene Klemmkörper angeordnet sind.

### Hintergrund der Erfindung

Eine Freilaufkupplung der eingangs genannten Art ist beispielsweise aus der DE 1 142 254 B bekannt. Im Ringraum dieser Freilaufkupplung sind zwei zur Führung der Klemmkörper vorgesehene Käfige angeordnet, von welchen einer als Ring aus federnd nachgiebigem Blech ausgebildet ist. Dieser Käfig weist Aussparungen auf, welche durch in Umfangrichtung hintereinander angeordnete, in Axialrichtung des Freilaufs angeordnete Querstege voneinander getrennt sind. In jede Aussparung erstreckt sich von einem Quersteg aus eine federnde Zunge, die jeweils einen Klemmkörper mit einer Kraft beaufschlagt. Der gesamte aus federndem Blech gefertigte Käfig ist radial innerhalb eines zweiten Käfigs gelagert. Insgesamt ist die Käfigkonstruktion des bekannten Freilaufs aufwendig gestaltet.

### Aufgabe der Erfindung

Der Erfindung liegt der Aufgabe zugrunde, eine reibschlüssige Freilaufkupplung anzugeben, welche sich bei uneingeschränkter Funktionalität durch eine besonders einfache Montagemöglichkeit auszeichnet.

### Zusammenfassung der Erfindung

Diese Aufgabe wird erfindungsgemäß gelöst durch eine Freilaufkupplung mit den Merkmalen des Anspruchs 1. Diese Freilaufkupplung weist in an sich bekannter Weise einen inneren Laufring und einen äußeren Laufring auf, zwischen welchen ein Ringraum gebildet ist, in dem einzelne in Umfangrichtung hintereinander angeordnete Klemmkörper in Aussparungen eines Käfigs geführt sind. Zwischen den Aussparungen befinden sich einzelne in Axialrichtung verlaufende Querstege. Von den Querstegen aus ragen Federelemente in die jeweils benachbarte Aussparung, um die Klemmkörper mit einer Kraft zu beaufschlagen. Die Querstege können Teile des Käfigs und/oder der Federelemente sein. Erfindungsgemäß erstreckt sich auf der dem Federelement abgewandten Seite des Querstegs von diesem aus mindestens eine der Halterung eines Klemmkörpers dienende Haltenase in die in Umfangsrichtung nächste Aussparung des Käfigs.

Hierbei sind der Quersteg, das Federelement und die mindestens eine Haltenase vorzugsweise einstückig, insbesondere aus einem Federblech, gefertigt. Dieses einstückige Feder-Halte-Element wirkt also mit zwei in Umfangsrichtung hintereinander angeordneten Klemmkörpern im einen Fall federnd und im anderen Fall nicht oder nur vernachlässigbar federnd zusammen. In bevorzugter Ausgestaltung befindet sich zwischen zwei benachbarten Aussparungen des Käfigs jeweils ein separates derartiges Feder-Halte-Element, das als so genannter Federreiter auf den Käfig aufgesteckt ist. Insgesamt entspricht die Anzahl der Federreiter in der Freilaufkupplung somit der Anzahl der Klemmkörper. Als Klemmkörper werden vorzugsweise Klemmrollen verwendet, welche sich, insbesondere im Gegensatz zu taillierten, prinzipiell beispielsweise aus der DE 1 142 254 B bekannten Klemmkörpern, durch eine besonders rationelle Herstellungsmöglichkeit auszeichnen. Des weiteren zeichnen sich die Klemmrollen durch einen besonders geringen Platzbedarf in radialer Richtung aus. Der der Führung der Klemmkörper sowie der Halterung der Federreiter dienende Käfig ist vorzugsweise aus Kunststoff, insbesondere aus faserverstärktem Kunststoff, gefertigt.

Nach einer bevorzugten Ausgestaltung ist das Federelement im Mittelbereich des Querstegs an diesem befestigt, nämlich einstückig angeformt, und weist zwei von diesem Befestigungsbereich axial auskragende Federschenkel auf. Die Federschenkel sind aus streifenförmigem Material gebildet, welches gegenüber dem Quersteg annähernd rechtwinklig, insbesondere in einem Winkel von mehr als 60°, abgeknickt ist und somit annähernd in einer Ebene verläuft, in der die Rotationsachse der Freilaufkupplung liegt. Das Federelement hat somit innerhalb des Ringraums nur einen geringen Platzbedarf in Umfangsrichtung. Dies begünstigt die dichte Anordnung von Klemmkörpern im Ringraum und somit die Übertragung hoher Drehmomente bei relativ kompakter Bauform.

Die Breite der Federschenkel weicht von der Breite des Querstegs vorzugsweise um nicht mehr als 50%, insbesondere um nicht mehr als 20%, ab. Bei schmaler Bauform der Querstege hat somit das Federelement auch in radialer Richtung nur einen geringen Platzbedarf innerhalb des Ringraums.

In axialer Richtung der Freilaufkupplung erstrecken sich die an einem Quersteg gehaltenen Federschenkel bevorzugt über insgesamt mindestens 70% der Länge des Querstegs, wobei der Quersteg länger als die Klemmkörper, insbesondere Klemmrollen, ist. Der axial zur Verfügung stehende Bauraum wird somit durch die Federelemente weitgehend ausgenutzt.

Die an die Querstege anschließenden Haltenasen haben den besonderen Vorteil, dass sie während der Montage, insbesondere, wenn der Käfig ohne den äußeren Laufring bereits auf den inneren Laufring aufgesetzt ist, ein Herausfallen der Klemmkörper aus dem Käfig verhindern. Die Haltenasen sollen jedoch nicht nur dazu beitragen, die Klemmkörper im Käfig zu halten, sondern zugleich auch ein Einsetzen der Klemmkörper in den Käfig von außen ermöglichen. Diesen konträren Anforderungen wird in bevorzugter Ausgestaltung dadurch Rechnung getragen, dass die in Umfangsrichtung gemessene Länge einer Haltenase das 1,5-fache der ebenfalls Umfangsrichtung gemessenen Breite eines Querstegs nicht übersteigt. Dies gilt sowohl für Ausführungsformen mit einer Haltenase als auch mit Ausführungsformen mit zwei oder mehr Haltenasen pro Quersteg. In jedem Fall ist eine einfaches automatisiertes Einsetzen der Klemmkörper, insbesondere Klemmrollen, radial von außen in den Käfig der Freilaufkupplung möglich.

Nachfolgend werden zwei Ausführungsbeispiele der Erfindung anhand einer Zeichnung erläutert. Hierin zeigen:

### Kurze Beschreibung der Zeichnung

- Figur 1: in einer perspektivischen Darstellung ausschnittsweise ein erstes Ausführungsbeispiel einer Freilaufkupplung,
- Figur 2-6: in verschiedenen Ansichten einen Federreiter der Freilaufkupplung nach Figur 1,
- Figur 7: ein zweites Ausführungsbeispiel einer Freilaufkupplung in einer Ansicht analog Figur 1,
- Figur 8-12: einen Federreiter der Freilaufkupplung nach Figur 7 in Ansichten analog Figuren 2-6, und

- Figur 13-17: in Ansichten analog Figuren 2-6 ein drittes Ausführungsbeispiel eines Federreiters einer Freilaufkupplung.

### Ausführliche Beschreibung der Zeichnung

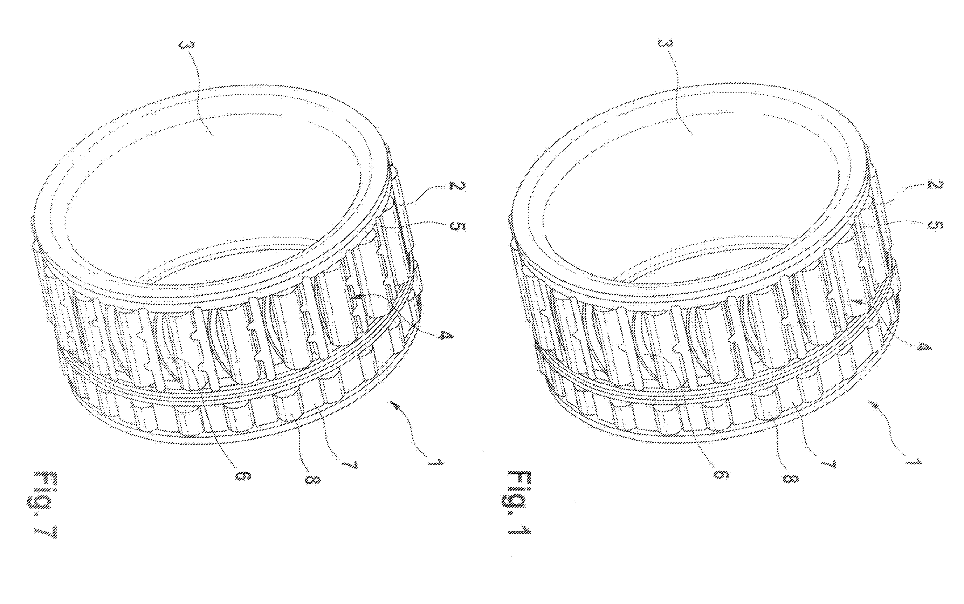

In Figur 1 sind mit Ausnahme eines Außenrings wesentliche Teile einer Freilaufkupplung 1 dargestellt. Als Rollen oder Nadeln ausgebildete Klemmkörper 2 befinden sich in einem Ringraum zwischen einem inneren Laufring 3 und dem der Übersichtlichkeit halber nicht dargestellten äußeren Laufring. Die Klemmrollen 2 sind in Aussparungen 4 eines aus Kunststoff hergestellten Käfigs 5 einzeln geführt. Der innere Laufring 3 und/oder der äußere Laufring weist in an sich bekannter Weise in der Darstellung nicht sichtbare Klemmrampen auf, um die gewünschte Freilauffunktion zu gewährleisten. Um die Klemmkörper 2 in definierter Weise gegen die Klemmrampen zu drücken, sind Federelemente 6 vorgesehen, die jeweils in eine Aussparung 4 ragen.

Dem die Klemmkörper 2 führenden Käfig 5 ist axial ein weiterer Käfig 7 benachbart, in welchem rollenförmige Wälzkörper 8 geführt sind, so dass eine Wälzlagerung zwischen dem inneren Laufring 3 und dem Außenring gegeben ist. Ebenso wie der Käfig 5 für die Klemmrollen 2 ist auch der Käfig 7 für die Wälzkörper 8 vorzugsweise aus Kunststoff, beispielsweise aus glasfaserverstärktem Kunststoff, gefertigt. Auch die einstückige Fertigung eines Kunststoffkäfigs, welcher die Funktion beider Käfige 5, 7 umfasst, ist möglich.

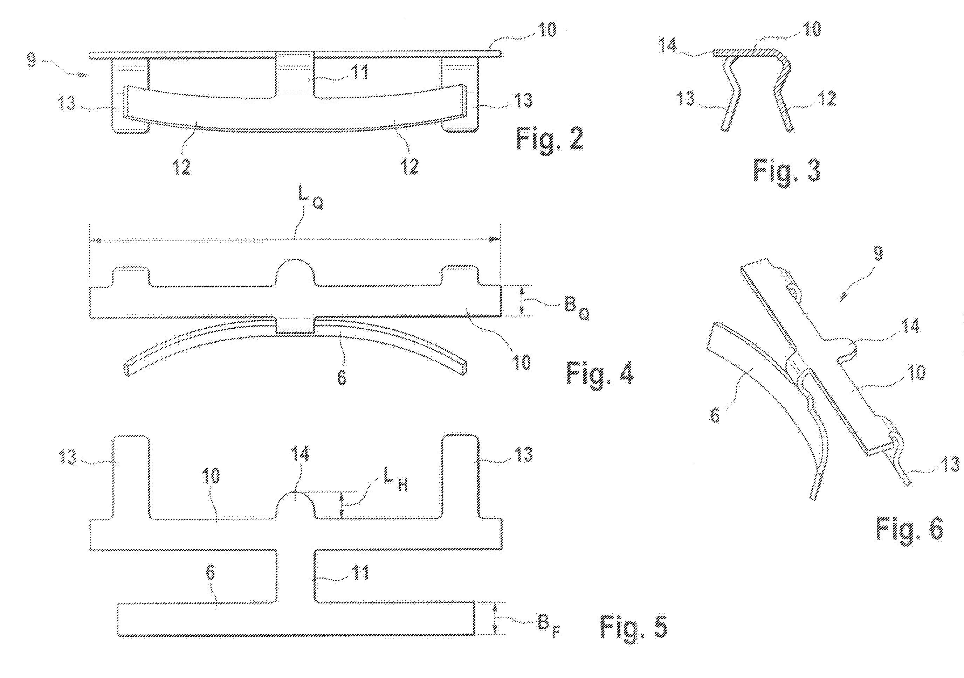

Die einzelnen Federelemente 6 sind jeweils Teil eines Federreiters 9, welcher in den Figuren 2-6 im Detail dargestellt ist. Der Federreiter 9 ist als einstückiges Stanz-Biege-Teil gefertigt. Das Federelement 6 ist an einem in Axialrichtung der Freilaufkupplung 1 verlaufenden Quersteg 10 gehalten, welcher radial von außen auf einen Quersteg des Käfigs 5 zwischen zwei benachbarten Aussparungen 4 aufgesetzt ist. Das Federelement 6 ist als Blattfeder ausgebildet, welche etwa parallel zu den Klemmrollen 2 angeordnet ist und mittig mittels eines vom Quersteg 10 abknickenden Übergangsstücks 11 mit dem Quersteg 10 verbunden ist. Vom an das Übergangsstück 11 anschließenden Mittelbereich des Federelementes 6 kragen zwei Federschenkel 12 des Federelementes 6 nach außen in Richtung zu den Stirnseiten der Klemmrollen 2 aus. Insgesamt erstreckt sich das Federelement 6 in Axialrichtung der Freilaufkupplung 1 über mehr als 80% der ebenfalls in Axialrichtung gemessenen Länge L_{Q} des Querstegs 10.

Auf der dem Übergangsstück 11 abgewandten Seite des Querstegs 10 schließen sich an diesen außenseitig, das heißt in der Nähe der Stirnseiten der Klemmrollen 2, zwei abknickende Haltearme 13 an, die in Axialansicht eine Haltekontur vervollständigen, die das Aufschnappen des Federreiters 9 auf den Käfig 5 ermöglicht. Die Federelemente 6 werden auf den Käfig 5 aufgesteckt, bevor dieser mit den Klemmkörpern 2 befüllt wird. Die Breite B_{Q} der Querstege 10 entspricht annähernd der Breite der Kunststoffquerstege des Käfigs 5 zwischen benachbarten Aussparungen 4. Die Breite der Federschenkel 12 ist mit B_{F} bezeichnet und entspricht annähernd der Breite B_{Q} des Querstegs 10.

Wird der mit den Federreitern 9 bestückte und auf den inneren Laufring 3 aufgesetzte Käfig 5 mit Klemmkörpern 2 befüllt, so werden diese mittels der Federschenkel 12 hauptsächlich mit einer Kraft in tangentialer Richtung beaufschlagt. Jedoch verlaufen die Federschenkel 12, wie insbesondere aus Figur 3 hervorgeht, in axialer Ansicht nicht genau in radialer Richtung der Freilaufkupplung 1. Vielmehr sind die Federschenkel 12 um etwa 10° bis 25° nach außen abgeknickt, so dass die Klemmrolle 2 vom Federelement 6 nicht nur in Tangentialrichtung, sondern auch radial nach außen mit einer Kraftkomponente beaufschlagt wird. Bei komplett zusammengebauter Freilaufkupplung 1 wird der Klemmkörper 2 somit durch das Federelement 6 in gewünschter Weise in die Klemmrampe zum Außenring gedrückt. Um ein unbeabsichtigtes Herausfallen von Klemmrollen 2 aus dem Käfig 5 während des Montagevorgangs zu verhindern, ragt auf der Seite der Haltearme 13 eine Haltenase 14 mittig aus dem Quersteg 10 heraus. Die in Umfangsrichtung der Freilaufkupplung 1, d.h. orthogonal zum Quersteg 10 gemessene Länge der Haltenase 14 ist mit L_{H} bezeichnet und entspricht etwa der Breite B_{Q} des Querstegs 10. Mit dieser Dimensionierung der Haltenase 14 ist sowohl ein einfaches Einsetzen der Klemmrollen 2 in die Aussparungen 4 möglich, als auch eine stabile Halterung der Klemmkörper 2 in den Aussparungen 4 gegeben. Die bestimmungsgemäße Klemmwirkung der Freilaufkupplung 1 wird durch die Haltenasen 14 nicht beeinflusst.

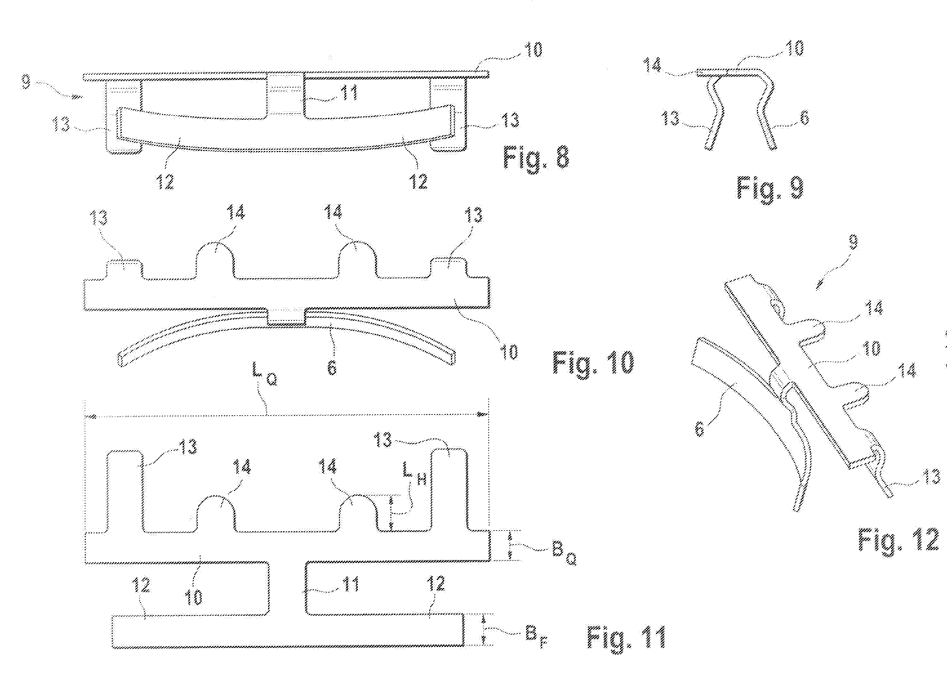

Die Figuren 7-12 zeigen ein weiteres Ausführungsbeispiel einer Freilaufkupplung 1, welches sich vom vorstehend beschriebenen Ausführungsbeispiel dadurch unterscheidet, dass von jedem Quersteg 10 zwei Haltenasen 14 ausgehen. Bei im Vergleich zum Ausführungsbeispiel nach den Figuren 1-6 geringfügig verlängerten Haltenasen 14 ist auch hier ein einfaches, insbesondere automatisiertes, Einsetzen der Klemmrollen 2 in den Käfig 5 möglich.

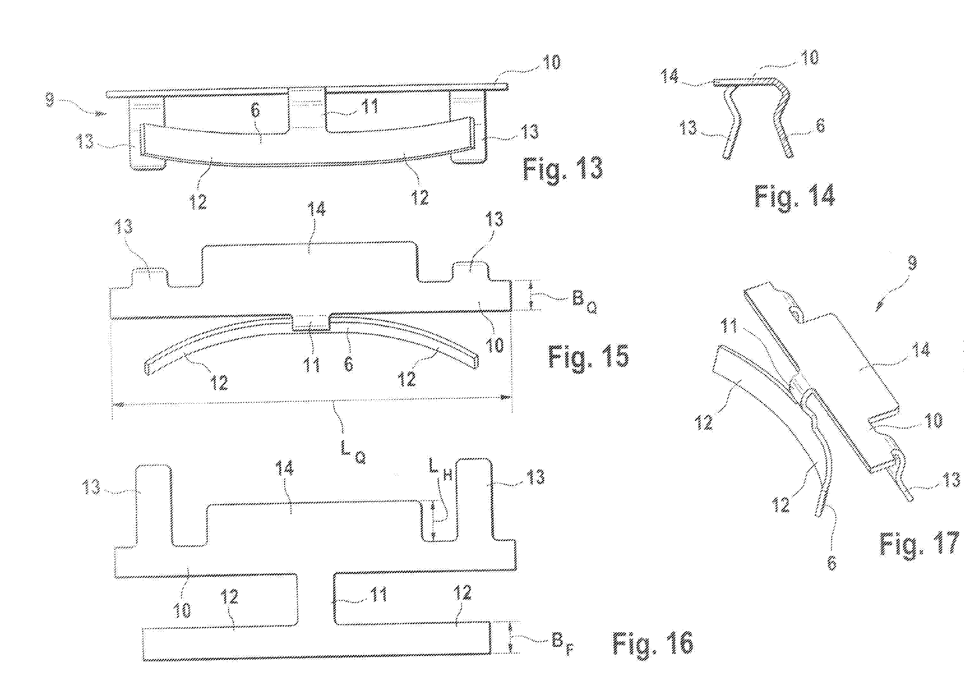

Im Ausführungsbeispiel nach den Figuren 13-17 ist die Haltenase 14 extrem breit ausgebildet und erstreckt sich in Axialrichtung der Freilaufkupplung 1, das heißt in Längsrichtung des Querstegs 10, über mehr als die Hälfte dessen Länge L_{Q}. Die Haltenase 14 hat somit die Gestalt einer Halteleiste, welche die Funktion der zwei Haltenasen 14 des Ausführungsbeispiels nach den Figuren 7-12 übernimmt. Das Ausführungsbeispiel nach den Figuren 13-17 zeichnet sich durch eine besonders stabile Führung der Klemmkörper 2 in den Aussparungen 4 des Käfigs 5 aus.

### Bezugszeichenliste

- 1: Freilaufkupplung
- 2: Klemmkörper
- 3: Laufring
- 4: Aussparung
- 5: Käfig
- 6: Federelement
- 7: Käfig
- 8: Wälzkörper
- 9: Federreiter
- 10: Quersteg
- 11: Übergangsstück
- 12: Federschenkel
- 13: Haltearm
- 14: Haltenase

- B_{F}: Breite des Federschenkels
- B_{Q}: Breite des Querstegs
- L_{H}: Länge der Haltenase
- L_{Q}: Länge des Querstegs

## Patentansprüche

1. Freilaufkupplung mit einem zwischen einem inneren Laufring (3) und einem äußeren Laufring gebildeten Ringraum, in welchem ein Käfig (5) angeordnet ist, der Aussparungen (4) zur Aufnahme von Klemmkörpern (2) aufweist, wobei jede Aussparung (4) durch in axiale Richtung verlaufende Querstege (10) begrenzt ist und sich an die Querstege (10) jeweils ein in eine Aussparung (4) ragendes, einen Klemmkörper (2) mit einer Kraft beaufschlagendes Federelement (6) anschließt, **dadurch gekennzeichnet, dass** sich auf der dem Federelement (6) abgewandten Seite des Querstegs (10) mindestens eine der Halterung eines Klemmkörpers (2) dienende Haltenase (14) in eine Aussparung (4) erstreckt.

2. Freilaufkupplung nach Anspruch 1, **dadurch gekennzeichnet, dass** als Klemmkörper (2) Klemmrollen vorgesehen sind.

3. Freilaufkupplung nach Anspruch 1 oder 2, **dadurch gekennzeichnet, dass** am Käfig (5) einzelne, jeweils zwischen zwei Aussparungen (4) angeordnete, ein Federelement (6) umfassende Federreiter (9) gehalten sind.

4. Freilaufkupplung nach einem der Ansprüche 1 bis 3, **dadurch gekennzeichnet, dass** der Käfig (5) aus Kunststoff gefertigt ist.

5. Freilaufkupplung nach einem der Ansprüche 1 bis 4, **dadurch gekennzeichnet, dass** das Federelement (6) im Mittelbereich des Querstegs (10) an diesem befestigt ist und zwei vom Mittelbereich axial auskragende Federschenkel (12) aufweist.

6. Freilaufkupplung nach Anspruch 5, **dadurch gekennzeichnet, dass** die Federschenkel (12) aus streifenförmigem Material gebildet sind, welches gegenüber dem Quersteg (10) rechtwinkelig abgeknickt ist.

7. Freilaufkupplung nach Anspruch 5 oder 6, **dadurch gekennzeichnet, dass** die Breite (B_{F}) der Federschenkel (12) von der Breite (B_{Q}) des Querstegs (10) um nicht mehr als 50% abweicht.

8. Freilaufkupplung nach einem der Ansprüche 5 bis 7, **dadurch gekennzeichnet, dass** sich die Federschenkel (12) eines Federlementes (6) insgesamt über mindestens 70% der Länge (L_{Q}) des Querstegs (10) erstrecken.

9. Freilaufkupplung nach einem der Ansprüche 1 bis 8, **dadurch gekennzeichnet, dass** die Länge (L_{H}) der Haltenase (14) das 1,5-fache der Breite (B_{Q}) des Querstegs (10) nicht übersteigt.
